# EUROPÄISCHE PATENTANMELDUNG

(11) **EP 1 780 077 A1**
(43) Veröffentlichungstag der Anmeldung: **02.05.2007**
(21) Anmeldenummer: 06022347.6
(22) Anmeldetag: 25.10.2006
(51) Int. Cl.: B60P 3/04, B60H 1/00

(54) **Laderaum für den Transport von lebenden Tieren, insbesondere für den Transport von Geflügel**

(30) Priorität: 28.10.2005 DE 102005051744
(71) Anmelder: Dirnhofer, Rainer, 92272 Freudenberg (DE)
(72) Erfinder: Dirnhofer, Rainer, 92272 Freudenberg (DE)
(74) Vertreter: Winter, Brandl, Fürniss, Hübner Röss, Kaiser, Polte Partnerschaft Patent- und Rechtsanwaltskanzlei

(57) **Zusammenfassung**

Es wird ein Laderaum (1), beispielsweise eines Lastkraftwagens oder Sattelzugaufliegers, für den Transport von lebenden Tieren mit einer Einrichtung versehen, um kontrolliert Luft zuzuführen. Die Menge an zugeführter Luft wird abhängig von der insgesamt von den Tieren verbrauchten Luft gesteuert. Die Luft strömt von einem im oberen Bereich des Laderaums angebrachten Lufteinlass (4,6) durch den Laderaum zu einem Luftauslass (7,8). Die am Lufteinlass angesaugte Luft wird in der Regel durch Kühlung (3) abhängig von der Ladung und den Umweltbedingungen auf eine gewünschte Temperatur gebracht.

Durch Vermeidung der Luftumwälzung im Laderaum wird die Gefahr von CO₂-Ansammlungen eliminiert und die Qualität der im Laderaum vorhandenen Luft gesteigert. Da nur die benötigte Luftmenge eingebracht und temperiert wird, verringert sich der Energieverbrauch gegenüber dem Stand der Technik. Nebenbei wird durch eine zielgerichtete Luftführung von oben nach unten der in dem Laderaum aufgewirbelte Staub verringert.

## Beschreibung

Die vorliegende Erfindung befasst sich mit einem Laderaum für den Transport von lebenden Tieren und noch genauer mit einem Auflieger oder Anhänger zum Transport von Geflügel.

Beim Transport von lebenden Tieren wie lebendem Geflügel, beispielsweise Küken, besteht die Gefahr, dass ein Teil der Tiere entweder aufgrund zu großer Hitzeentwicklung (besonders im Sommer) oder aufgrund mangelnder Luftzirkulation und daraus folgender Erhöhung des CO₂-Anteils stirbt. Dies ist sowohl aus ethischen Gründen bzw. Gründen des Tierschutzes als auch wegen des monetären Verlustes offensichtlich zu vermeiden.

Daher wird im Stand der Technik üblicherweise, zum Beispiel in Lastwagenaufliegern, in denen über 90000 Küken transportiert werden können, eine sehr starke Belüftung eingebaut, welche die Versorgung der Tiere mit ausreichend Luft und eine ausreichende Wärmeabfuhr sicherstellt. Dies wird durch Ventilatoren erreicht, die an der Vorderseite eines Aufliegers vorgesehen sind, um Luft durch den Auflieger in Richtung zu dessen Rückseite zu blasen. Eine Variation dieses Konzepts findet sich in der WO 03/031224, die vorschlägt, in einem Auflieger zum Kükentransport die Luft vorne anzusaugen und an Stellen auszublasen, an denen durch den Fahrtwind ein Unterdruck entsteht. Dadurch kann nach Darstellung dieser Druckschrift mit geringerem Energieaufwand ein hoher Luftstrom aufrecht erhalten werden.

Allerdings wird nach diesem Stand der Technik die Außenluft nicht temperiert; die Wärmeabfuhr hängt daher von der Stärke des Luftstroms und von der Außentemperatur ab. Insbesondere bei hohen Außentemperaturen kann dabei der Fall eintreten, dass trotz höchster Ventilationsleistung nicht ausreichend Wärme abgeführt werden kann; bei kalten Außentemperaturen kann die Innentemperatur nicht auf einem geeigneten Wert gehalten werden. Zudem ist der hohe benötigte Luftstrom den Tieren unter Umständen nicht zuträglich. Schließlich wird vergleichsweise viel Energie für die Aufrechterhaltung der Strömung benötigt.

Die DE 26 33 243 betrifft eine Klimaanlage für Schienenfahrzeuge zum Personentransport, bei der die zugeführte Luftmenge abhängig von der Besetzung eines Abteils in allen Abteilen so temperiert wird, dass jedem Abteil eine temperierte Luftmenge zugeführt wird, die von der in dem einen Abteil benötigten Kühlleistung abhängt. Zudem wird nicht die Luftmenge, sondern nur die zur Klimatisierung des Wagens benötigte Heiz- bzw. Kühlleistung über einen ständig zuströmenden Grundanteil gedeckt.

Die GB 1 110 471 A zeigt ein Fahrzeug für den Transport von Kleintieren, bei dem Käfige in einem von oben nach unten verlaufenden Luftstrom angeordnet sind.

Die DE 199 23 189 C1 offenbart eine Ausgestaltung einer Klimaanlage in einem Personenkraftwagen zur Klimatisierung des Fonds einer Fahrgastzelle.

Die US 6,581,544 B1, die als nächstkommender Stand der Technik angesehen wird, gegen die der Oberbegriff der unabhängigen Ansprüche abgegrenzt ist, lehrt eine Alternative zu diesem Verfahren. Nach der Lehre dieser Druckschrift wird in einem Auflieger zum Geflügeltransport Umluft aus dem Laderaum eines Sattelzugaufliegers in eine Klimaanlage gesaugt, dort temperiert und unter dem Boden des Laderaums durch Kanäle geführt. Diese Kanäle verteilen die kalte Luft im Inneren des Aufliegers. Ventilatoren sind an der Decke des Aufliegers vorgesehen, um die Luft zu verwirbeln, so dass möglichst überall ein ähnliches Klima herrscht. Wenn ein CO₂-Sensor erfasst, dass der CO₂-Gehalt der Luft zu hoch wird, öffnet ein Lufteinlassventil, um Außenluft einzulassen. Es ist in einer Ausführungsform auch möglich, stets eine vorab festgelegte Menge an Luft auszutauschen, statt den Sensor zu nutzen.

Dabei wird im Vergleich zum herkömmlichen Stand der Technik viel Raum benötigt, um sowohl unter dem eigentlichen Laderaumboden Luftzuführungen als auch über der Ladefläche zusätzliche Ventilatoren anzubringen. Zudem wird es erforderlich, besondere Maßnahmen vorzusehen, damit die in die Klimaanlage angesaugte Umluft die Klimaanlage nicht verschmutzt, beim Geflügeltransport insbesondere durch Federn und Staub. Darüber hinaus werden mehrere CO₂-Sensoren benötigt, um zu verhindern, dass ein CO₂-"See" an einer Stelle entsteht, an der kein Sensor vorhanden ist, so dass Erstickungsgefahr drohen kann. Schließlich ist es ungünstig, Luft von unten zuzuführen, wo sie sowohl Staub aufwirbelt als auch bei einer Kühlung nicht durch natürliche Konvektion verteilt wird, so dass die oben angesprochenen zusätzlichen Ventilatoren erforderlich werden.

Im Hinblick auf die vorstehend beschriebenen Nachteile ist es eine Aufgabe der Erfindung, einen temperierten Luftstrom bereitzustellen, um die Tiere möglichst effizient mit Frischluft aus der Umgebung des Laderaums zu versorgen, die in den Laderaum eingeführte Frischluft als Umluft umzuwälzen und sie als Abluft wieder an die Umgebung abzuführen.

Diese Aufgabe wird durch die Gestaltung eines Laderaums in Übereinstimmung mit Anspruch 1 und ein Verfahren nach Anspruch 16 gelöst.

Erfindungsgemäß wird ein Umluftsystem für den Laderaum mit Temperierung durch kontinuierliche Zufuhr an Frischluft ergänzt. Dadurch kann vermieden werden, dass sich gefährliche CO₂-Ansammlungen im Laderaum bilden können, ohne dass eine aufwändige Sensorik erforderlich ist. Gleichzeitig kann die gewünschte Temperatur aufrecht erhalten werden.

Nach der Erfindung berechnet eine Steuereinheit den Luftdurchsatz bzw. die Menge an zuzuführender Frischluft pro Zeiteinheit, der bzw. die benötigt wird, um die Ladung sicher mit ausreichend Sauerstoff zu versorgen. Wenn diese Menge bekannt ist, wird in einem zweiten Schritt abhängig von der durch die Ladung erzeugten Abwärme und dem aufgrund des Luftverbrauchs nötigen Durchsatz eine zu erzielende Temperatur der Frischluft festgelegt.

Dadurch kann die Klimatisierung auf die Luftmenge begrenzt werden, die tatsächlich benötigt wird, um die Ladung zu versorgen. Dadurch kann Energie gespart werden, während gleichzeitig durch den kontinuierlichen Luftaustausch eine weitgehend gleichbleibende Luftqualität sichergestellt ist, so dass sich keine CO₂-Anhäufungen bilden können.

In einer bevorzugten Ausführungsform wird die temperierte Frischluft oberhalb der Stelle in den Laderaum eingebracht, an der die Abluft aus dem Laderaum entfernt wird.

Dadurch erreicht man, dass die Luftströmung durch natürliche Konvektion unterstützt wird, weil die (insbesondere im Sommer) gekühlte temperierte Luft ohne zusätzlichen Aufwand nach unten sinkt. Zusätzlich wird dabei kein Staub und Schmutz vom Boden aufgewirbelt, sondern im Gegenteil wird aufgewirbelter Staub wieder auf den Boden zurückgeführt, was zur Erhöhung der Luftqualität und damit zur Gesunderhaltung der Ladung beiträgt.

In einer weiter bevorzugten Ausführungsform werden Sensoren verwendet, um die Umweltbedingungen in dem Laderaum und außerhalb zu messen und die Luftzufuhr und Temperierung abhängig von den Umgebungsbedingungen zu steuern.

Als Sensoren, die einen Einfluß auf die Luftqualität messen können, sind verschiedene Einrichtungen denkbar. Sicherlich ist die Temperatur der Außenluft eine wesentliche Messgröße. Auch ihr Feuchtigkeits- und Staubgehalt sowie der Gehalt an Schadstoffen wie CO₂ können bei der Festlegung der benötigten Frischluftmenge wichtig sein.

Zudem ist auch die Kontrolle der Luftqualität im Laderaum mit vergleichbaren Sensoren im Sinne einer Regelung wichtig. Beispielsweise kann eine Klimaanlage, die zum Temperieren eingesetzt wird, gleichzeitig auch die Luftfeuchtigkeit herabsetzen oder erhöhen; im Falle einer Passfahrt kann versucht werden, durch die Regelung der Luftzu- und Abfuhr einen Überdruck in dem Laderaum aufzubauen etc. Selbst wenn die benötigte Luftmenge vorab festgelegt ist, kann es daher sinnvoll sein, die Versorgung an die Umstände der Fahrt anzupassen. In einem Tunnel kann möglicherweise vorübergehend der Bedarf an Zuluft steigen, weil die Luft einen geringeren prozentualen Sauerstoffgehalt aufweist, wobei auch der Kühlbedarf aufgrund der geänderten Außenlufttemperatur anders sein kann. Schließlich kann der Kühlbedarf, beispielsweise aufgrund von Sonneneinstrahlung oder allgemein während des Tages ansteigender Außentemperatur steigen, ohne dass die benötigte Luftmenge größer wird.

In einer weiter bevorzugten Ausführungsform wird die Luft so geführt, dass der Luftstrom eine Strömungskomponente in Längsrichtung des Laderaums aufweist.

Wenn die Umluft im Laderaum nicht ausschließlich umgewälzt, sondern über Frischluftein- und Abluftauslässe schräg geführt wird, ist es möglich, bei einer Fahrt eines mit dem Laderaum versehenen Fahrzeugs den Fahrtwind zu nutzen, um diese waagerechte Komponente zu verstärken. Dadurch kann die Frischluft noch besser verteilt werden. Zudem kann das angesprochene Problem, dass Staub aufgewirbelt wird, trotz der vorgeschlagenen Strömung von oben nach unten nicht vollständig ausgeschaltet werden, weil weitere Einflüsse, beispielsweise durch die Fahrt bedingte Schwingungen des Laderaumbodens, dazu führen können, dass dennoch Staub aufgewirbelt wird. Nach dieser bevorzugten Ausführungsform wird der aufgewirbelte Staub und Schmutz langfristig in einer Richtung hin zu einer Öffnung transportiert, durch die er ins Freie oder in eine Auffangvorrichtung gelangen kann. Dadurch reinigt sich der Laderaum in gewissem Umfang selbst.

Man kann weiterhin an dem Luftauslass, an dem sich wie vorstehend beschrieben bevorzugt Staub aus dem Laderaum sammelt, eine regelmäßige automatische Reinigung vorsehen; beispielsweise kann unter einem zur Rückseite des Laderaums zeigenden Luftauslass eine verschließbare Öffnung in dem Laderaum vorgesehen sein. Wird diese Öffnung entweder regelmäßig oder bei Ansammlung einer bestimmten Menge an Staub während der Fahrt geöffnet, so erzeugt der Fahrtwind einen Sog, der den angesammelten Staub nach außen zieht. Eine gleichzeitig vor dem Luftauslass herunterfahrende Bürste, die den dort angesammelten Schmutz nach unten bürstet, kann diesen Effekt noch weiter verstärken. Alternativ kann auch eine Rütteleinrichtung, die beim Öffnen der Öffnung aktiv wird, um eine Abdeckung des Luftaustritts in Schwingung zu versetzen, eine automatische Reinigung unterstützen.

Weiterhin kann der Luftauslass einen Filter aufweisen, um eventuelle Gerüche sowie Staub, Schmutz und Bakterien aus dem Laderaum zu filtern. Die Vorschriften für Tiertransporte werden derzeit stets strenger. Zudem werden durch Anbringen eines solchen Filters speziell Transporte kranker Tiere, bei denen ein Austreten der Krankheitserreger zu vermeiden ist, möglich. Ein derartiger Filter kann auch am Frischlufteinlass vorgesehen sein, um weniger verschmutzte Luft einzuführen. Wird ein solcher Filter angebracht, ist auf eine korrekte Auslegung der Lufteinlässe und Luftzuführungen ebenso wie der Luftauslässe zu achten, um eine aufgrund der Filter nötige Zusatzleistung für den Luftdurchsatz aufbringen zu können.

Nach einer weiter bevorzugten Ausführungsform ist der Laderaum teilbar, und die Steuereinrichtung kann über strömungstechnische Mittel erreichen, dass der Luftstrom nur einen Teil des Laderaums durchströmt.

Wenn beispielsweise der Laderaum nicht vollständig oder nicht ausschließlich mit lebenden Tieren beladen ist, kann es sinnvoll sein, die Frischluft nur einem Teil des Laderaums zuzuführen oder nur in einem Teil des Laderaums die Luft umzuwälzen. Zudem kann bei einer Beladung mit unterschiedlichen Tierarten oder bei einer Beladung in unterschiedlicher Dichte in verschiedenen Abteilen die Luftversorgung pro Abteil angepasst werden. Dabei könen die Abteile physikalisch, beispielsweise durch Trennwände, oder auch nur virtuell durch unterschiedliche Ansteuerung der Umwälzung und Frischluftzufuhr separiert sein. Weitere geeignete Mittel zur Schaffung von Abteilen sind steuerbare Ventile, Umlenkklappen, seperate Zuleitungen und Pumpen oder ähnliche geeignete Mittel in der Frischluftzufuhr und/oder Umluftumwälzung. Dadurch kann zum einen weitere Energie gespart werden, zum anderen wird es möglich, die Luftzufuhr für verschiedene Tierarten anzupassen, so dass mehrere Tierarten gleichzeitig transportiert werden können. Somit kann der Laderaum stets effizient genutzt werden. Es kann sogar, beispielsweise über separate Zuführung beheizter oder unbehandelter Außenluft, bei der erfindungsgemäßen Temperiereinrichtung ermöglicht werden, in solchen Abteilen unterschiedliche Temperaturen zu erzeugen.

Vorteilhafterweise weist die Frischluftzufuhr strömungstechnische Mittel auf, um den gesamten Raum auf einfache Weise gleichmäßig mit Frischluft zu versorgen.

Wenn der gesamte Laderaum gleichmäßig beladen ist, was der Regelfall sein sollte, ist es zweckmäßig, mit möglichst einfachen Mitteln eine gleichmäßige Durchströmung des Laderaums zu erreichen. Dies kann durch Austrittsöffnungen für die Zuführung der Frischluft in den Laderaum erreicht werden, die mit der Entfernung vom Lufteinlass zunehmende Öffnungsquerschnitte aufweisen.

Der genannte Laderaum kann vorteilhaft beispielsweise in einem Lastkraftwagen oder Sattelzugauflieger eingebaut sein; es ist jedoch auch denkbar, einen genormten Frachtcontainer entsprechend auszurüsten, um ihn mit unterschiedlichen Transportmitteln, beispielsweise auch Schiffen oder Zügen, transportieren zu können.

Weiterhin wird erfindungsgemäß ein Verfahren geschaffen, um einen Laderaum zum Transport von lebenden Tieren kontinuierlich mit temperierter Frischluft zu versorgen, so dass stets ein günstiges Klima für den Transport der Tiere vorhanden ist, während gleichzeitig vermieden wird, dass die Umluft gefährlich hohe Schadstoffkonzentrationen erreichen kann.

Bevorzugt können die Einrichtungen zum Temperieren und zur Luftzufuhr abhängig von der Beladung so gesteuert werden, dass mit geringem Energieaufwand eine ausreichende Versorgung der geladenen Tiere sichergestellt ist.

Weitere vorteilhafte Ausführungsformen sind Gegenstand von Unteransprüchen.

Nachfolgend wird ein Ausführungsbeispiel der Erfindung unter Bezugnahme auf die Zeichnung beschrieben.

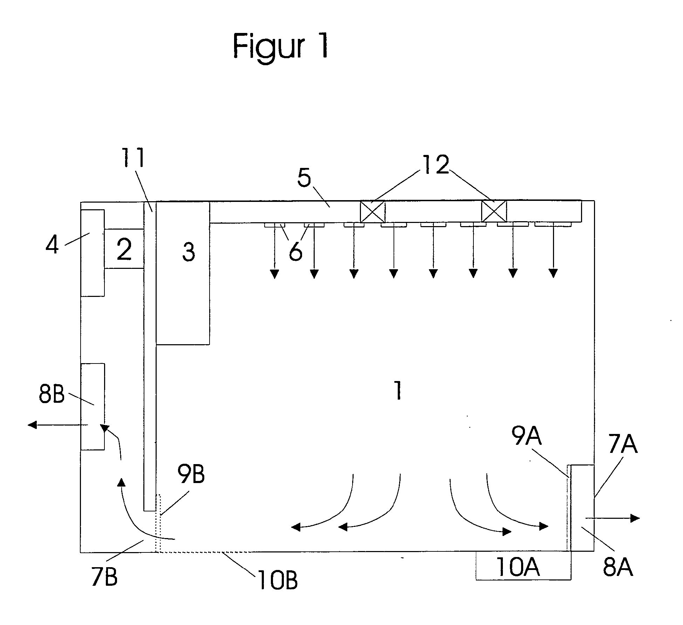

Fig. 1 zeigt einen Laderaum **1** nach der vorliegenden Erfindung.

Als Laderaum wird hier der in der Regel von Wänden umgebene Nutzraum angesehen, in den eine bestimmte Last, hier vorwiegend Tiere, zum Zweck des Transports eingeladen werden kann. Der Laderaum 1 kann Teil eines (nicht gezeigten) Sattelzugaufliegers, eines Lastkraftwagens, eines Containers oder einer ähnlichen Transportvorrichtung sein. An der Vorderseite des Laderaums 1 befindet sich ein Aufbau zum Einsaugen und Temperieren von Luft. Der Aufbau besteht aus einer Temperiervorrichtung bzw. Klimaanlage **3,** die eine Luftansaugvorrichtung **4,** beispielsweise einen Ventilator oder mehrere Ventilatoren aufweist. Durch die Ansaugvorrichtung 4 wird Frischluft in die Klimaanlage gesaugt, wo sie auf eine gewünschte Temperatur gebracht wird. Obwohl hier nicht gezeigt, kann eine Filtervorrichtung vorgesehen sein, um Staub, Wasser, Insekten, Bakterien oder andere unerwünschte in der Frischluft vorhandene Teile bereits vor dem Eintritt in die Klimaanlage auszusondern.

Ferner weist der Laderaum 1 eine (nicht gezeigte) verschließbare Öffnung auf, durch die Frachtgut in den Laderaum eingebracht werden kann. Diese Öffnung ist vorzugsweise auf einer Seite des Laderaums vorgesehen, an welcher nicht die Klimaanlage 3 angebracht ist, da sonst diese Klimaanlage zum Beladen aus dem Weg geschafft werden müßte; der Laderaum kann demnach je nach den Erfordernissen von oben, unten, von einer Seite im rechten Winkel zu der Seite, an der die Klimaanlage 3 angeordnet ist, oder bevorzugt von der Seite, welche der Klimaanlage gegenüber angeordnet ist, zu öffnen und zu beladen sein.

Aus der Klimaanlage 3 wird die Luft in diesem Ausführungsbeispiel in ein Röhrensystem **5** gepumpt, das an der Oberseite des Laderaums angebracht ist. Die Frischluft kann von dort durch Öffnungen **6** austreten, die Lufteinlassöffnungen des Laderaum bilden. Dieses Röhrensystem 5 nebst den Öffnungen 6, das einen Luftverteiler bildet, ist vorzugsweise so gestaltet, dass über die gesamte Länge des Laderaums ein gleichmäßiger Luftstrom die Öffnungen verläßt. Wie vorstehend beschrieben, kann dies u.a. dadurch erreicht werden, dass die Öffnungen, durch die die Frischluft austritt, mit zunehmendem Abstand von der Einpumpstelle größer werden, so dass bei im Verlauf des Röhrensystems abnehmendem Druck durch die größer werdenden Austrittsöffnungen dieselbe Menge Luft wie am Anfang der Röhren austritt.

Aufgrund der nachdrückenden Frischluft aus der Luftzuführung der Klimaanlage strömt die gekühlte Frischluft durch die Öffnungen aus. Durch die natürliche Konvektion strömt sie nach unten. Außerdem wird die Luft durch im Innenraum angeordnete Ventilatoren umgewälzt. Zusätzlich kann der Luftstrom nach unten durch Vorrichtungen zum Abführen der Abluft, beispielsweise Ventilatoren 8A, 8B, die die Luft unterhalb der Zuführung aus dem Inneren des Laderaums 1 abziehen, verstärkt werden.

Nach einer Ausführungsform ist unten auf der der Klimaanlage abgewandten Seite des Laderaums ein Luftauslass **7A** angeordnet, durch den die verbrauchte Luft aus dem Laderaum austreten kann. Dieser Auslass kann zusätzlich mit Ventilatoren **8A** versehen sein, um den Abzug zu beschleunigen. Zudem können Schutzvorrichtungen wie Schutzgitter **9A** oder (nicht gezeigte) Filter für Staub, Gerüche und/oder Bakterien vorgesehen sein, um Schmutz vor diesem Auslass zu entfernen, insbesondere wenn er durch Ventilatoren unterstützt ist. Wenn dies nicht der Fall ist, kann die Größe des Auslasses so gewählt werden, dass herkömmliche Schmutzteile nicht daran hängen bleiben können.

Als eine Reinigungsvorrichtung kann beispielsweise ein regelmäßig in Schwingung versetztes senkrechtes Gitter 9A vorgesehen sein, das während kurzzeitiger Stops des Ventilators in Schwingung versetzt wird, um daran anhaftende Federn und ähnliche Teile, die den Ventilator belasten könnten, nach unten in einen verschließbaren Schmutzauffangbehälter **10A** abzuschütteln. Anstelle des Auffangbehälters 10A kann je nach Anforderungen auch eine Konstruktion gewählt werden, welche den Schmutz nach außen abgibt. Beispielsweise ist in der Figur mit 10B eine Öffnung im Boden des Laderaums bezeichnet. Diese Öffnung kann vergittert sein. Bewegt sich der Laderaum, beispielsweise als Laderaum eines Lastkraftwagens, so erzeugt der Fahrtwind einen Sog an der Öffnung 10B. Durch diesen Sog wird mindestens ein Teil der Luft, die durch die Luftzuführung in den Laderaum 1 eingebracht wird, nach außen gesaugt. Diese Luft kann auch den aufgewirbelten Schmutz aus dem Laderaum durch die Öffnung 10B mitnehmen. Wenn dieser Aufbau verwendet und geeignet ausgelegt wird, kann auf weitere Luftauslässe mit Ventilatoren 8A, 8B, die die Luft heraussaugen sollen, verzichtet werden, sofern keine Filter für die Abluft notwendig sind, die wiederum den zum Abtransport der Luft nötigen Druck erhöhen würden.

Auch wenn dies aus Gründen der Vereinfachung nicht gezeigt ist, können die Öffnungen 8, 10 für den Luftaustritt an den Seitenwänden des Laderaums, bevorzugt im unteren Bereich desselben, angebracht sein. Diese Anbringung hat gegenüber der in der Figur gezeigten Anbringung den Vorteil, dass von der Straße herrührender Staub nicht leicht in das Innere des Laderaums gelangt. Selbst wenn dies erfindungsgemäß möglich ist, birgt eine hohe Anbringung an den seitlichen Wänden die Gefahr, dass das ausgeatmete CO₂ sich aufgrund des höheren spezifischen Gewichts im unteren Bereich des Fahrzeugs ansammelt, so dass ein Teil der Tiere Gefahr laufen könnte, in diesen CO₂-"Seen" zu ersticken.

In einer in der Figur 1 gezeigten Ausführungsform wird ein Ventilator **8B** auf der gleichen Seite des Laderaums wie die Temperierungseinrichtung 3 und die Lufteinlassvorrichtung 4 angeordnet, und es wird eine Trennwand **11** so eingezogen, dass Luft auf der Unterseite der Trennwand in Richtung der Rückwand und dann aufwärts hin zum Ventilator 8B strömen kann. Der eigentliche Laderaum geht in diesem Aufbau nur bis zur Trennwand 11. Der Luftaustritt aus dem Laderaum findet folglich auch am unteren Ende der Trennwand 11 statt. Dadurch kann man erreichen, dass der Schmutz den Ventilator 8B, der die Abluft nach außen bläst, aufgrund der Schwerkraft entlang des senkrecht nach oben geführten Luftwegs nicht erreicht. An der Trennwand kann weiter bevorzugt die Klimatisierung bzw Lufttemperierung 3 angebracht sein. Weiterhin können zusätzlich ein Auffanggitter oder ein Filter 9B und eine Schmutzauffangvorrichtung 10B an der Trennwand 11 oder an einer anderen Stelle im Weg der Abluft angebracht werden, die analog zu den Vorrichtungen 9A und 10A arbeiten können. Selbstverständlich kann es ausreichen, neben der Umwälzung entweder die zur Luftabsaugung dienende Anordnung aus den Vorrichtungen 7A, 8A, 9A und 10A oder die Anordnung aus den Vorrichtungen 7B, 8B, 9B und 10B zu verwenden; dies bleibt je nach Größe des Laderaums 1, voraussichtlich zu transportierenden Tieren, Umgebungsbedingungen beim Einsatz etc. dem Fachmann überlassen.

Um eine flexible Beladung und Strömungsverteilung zu ermöglichen, können in den Zuführröhren 5 Regel- oder Absperrventile **12** oder andere strömungstechnische Mittel wie Klappen, Drosseln oder zusätzliche Pumpen vorgesehen sein. Dadurch ist es möglich, bei gemischter Beladung, beispielsweise Beladung mit unterschiedlichen Tierarten, mit Tieren und Pflanzen oder mit Tieren und Tierfutter gleichzeitig eine unterschiedliche Luftströmung in verschiedenen Teilen des Laderaums zu erzeugen. Wenn beispielsweise in einem vorderen Abschnitt des Laderaums Küken transportiert werden, in einem hinteren Bereich dagegen z.B. Pflanzen oder Hühnerfutter, so kann durch Stoppen der Luftzufuhr im hinteren Bereich und Umwälzung und Frischluftzufuhr nur in den vorderen Bereich weitere Energie gespart werden.

Zudem kann der Laderaum, um diesen Effekt weiter zu unterstützen, durch Unterteilungsvorrichtungen wie (nicht gezeigte) Trennwände unterteilt werden.

Weiterhin können innerhalb und außerhalb des Laderaums Sensoren für die Ermitlung der benötigten Menge und Temperatur der zugeführten Luft vorgesehen sein. Zu diesen Sensoren können beispielsweise ein Außentemperatursensor, ein Innentemperatursensor, ein Feuchtigkeitssensor, ein Drucksensor, eine Messvorrichtung zum Messen der Luftströmung oder ein CO₂- oder O₂-Sensor gehören, die nicht in der Figur gezeigt sind.

Wenn es als nicht ausreichend erachtet wird, dass ständig Frischluft zugeführt wird, um eine ideale Versorgung der Ladung zu gewährleisten, kann der vorstehend beschriebene Aufbau durch eine (nicht gezeigte) Steuereinheit, die einen Mikroprozessor, ein RAM und ein ROM aufweist, nach einer bevorzugten Ausführungsform erfindungsgemäß wie folgt gesteuert werden:

Zunächst werden der Steuereinheit über eine (ebenfalls nicht gezeigte) Eingabeeinheit die Anzahl und Art der lebenden Tiere eingegeben.

Aufgrund der Tierart bestimmt die Steuereinheit nach einer beispielsweise im ROM abgespeicherten Tabelle die Menge an benötigter Luft pro Tier und Zeiteinheit, und berechnet daraus zusammen mit der Anzahl an Tieren die resultierende zuzuführende gesamte Frischluftmenge pro Zeiteinheit (im Folgenden kurz gesamte Frischluftmenge genannt). Zudem wird die ideale Transporttemperatur aufgrund der eingegebenen Tierart durch die Steuerung festgelegt.

Alternativ können diese Werte auch von außen eingegeben werden, beipielsweise aufgrund von zur Verfügung gestellten Tabellen durch den Frachtführer. Weiterhin wird die Außenlufttemperatur und andere oben genannte Werte (Luftfeuchtigkeit etc.) bestimmt und eingelesen. Dies kann ebenfalls durch mit der ECU verbundene Sensoren oder durch Eingabe von außen erfolgen.

Aufgrund der so bestimmten Werte werden die Gesamtluftmenge und die benötigte Leistung bestimmt, um die Luft auf die ideale Temperatur zu temperieren, im Regelfall zu kühlen. Es kann bei geringer Außentemperatur trotz der Wärmeabgabe durch die Fracht erforderlich sein, die Luft aufzuheizen, um die ideale Transporttemperatur zu erhalten; in der Regel wird jedoch eher eine Kühlung erforderlich sein, um die gewünschte Temperatur einzuhalten. Daher wird im Folgenden von Kühlung ausgegangen. Weiterhin können Werte wie die ideale Luftfeuchtigkeit im Laderaum bestimmt und eingestellt werden; dies wird jedoch hier als für den Fachmann analog zur beschreibenen Einstellung der Temperatur und Luftmenge angesehen und nicht weiter erläutert.

Die Steuereinrichtung kann die Klimaanlage dazu veranlassen, die gesamte Frischluftmenge abzukühlen und einzubringen, sobald der Laderaum befüllt wird. Üblicherweise wird jedoch, je nach Empfindlichkeit der Fracht und den Umständen der Beladung, erst später mit dem Einbringen der Luft begonnen, weil während des Beladens der Luftaustausch durch die Türen des Laderaums in der Regel ausreicht ist und außerdem die Beladung meist an einem geschützten Ort mit guten Bedingungen für die Fracht stattfindet.

Während der Fahrt wird dann die berechnete benötigte Frischluftmenge pro Zeiteinheit durch den Lufteinlass 4 angesaugt, in der Klimaanlage 3 temperiert und über die Verteilvorrichtungen 5,6 in den Innenraum abgegeben. Die verbrauchte Luft wird über die Auslässe 7, 8 abgeführt. Je nach Ausführung der Erfindung kann die Leistung der Anlage kontinuierlich nach den errechneten oder erfassten Daten gesteuert bzw. geregelt werden.

Alternativ zur Berechnung und Steuerung kann die Klimaanlage bei weniger empfindlichem Transportgut mit einer fixen Leistung, beispielsweise 70% der maximal förderbaren Luftmenge, angefahren werden. Anschließend kann die Versorgung auf der Grundlage von über Sensoren erfassten Daten eingeregelt werden.

Auf diese Weise ist es möglich, die anfängliche Berechnung der Ausgangswerte für die Versorgung zu umgehen, und es muss lediglich die ideale Transporttemperatur und die für die Tierart zulässige Menge an CO₂ in der Abluft oder andere die Luftqualität bestimmende Faktoren festgelegt werden, um anhand dieser Werte die benötigte Luftmenge und Kühlleistung zu regeln. Dabei wird zunächst die über den Lufteinlass 4 zuzuführende Luftmenge so geregelt, dass beispielsweise der CO₂-Wert in der Abluft durch die Luftauslässe 7, 8 unter einem vorab bestimmten Wert bleibt. Die Leistung der Klimaanlage, um die Luft zu kühlen, wird dabei lediglich der Luftmenge angepasst, wobei die Temperatur der aus der Klimaanlage abgegebenen Frischluft nicht geändert wird. Dies kann erreicht werden, indem die Kühlleistung der Klimaanlage proportional zu der Menge der Luft geändert wird.

Weiter alternativ legt der Frachtführer entsprechende Werte nach eigenen Erfahrungen vorab fest und ändert sie während der Fahrt. In diesem Fall kann auf aufwändige Steuerungen und Sensoren verzichtet werden.

Zusammenfassend leistet die Erfindung Folgendes:

Es wird ein Laderaum, beispielsweise eines Lastkraftwagens oder Sattelzugaufliegers, für den Transport von lebenden Tieren mit einer Einrichtung versehen, um kontrolliert Luft zuzuführen. Die Menge an zugeführter Luft wird abhängig von der insgesamt von den Tieren verbrauchten Luft gesteuert. Die Luft strömt von einem im oberen Bereich des Laderaums angebrachten Lufteinlass durch den Laderaum zu einem Luftauslass. Die am Lufteinlass angesaugte Luft wird in der Regel durch Kühlung abhängig von der Ladung auf eine gewünschte Temperatur gebracht.

Durch Vermeidung der Luftumwälzung im Laderaum wird die Gefahr von CO₂-Ansammlungen eliminiert und die Qualität der im Laderaum vorhandenen Luft gesteigert. Da nur die benötigte Luftmenge eingebracht und temperiert wird, verringert sich der Energieverbrauch gegenüber dem Stand der Technik. Nebenbei wird durch eine zielgerichtete Luftführung von oben nach unten der in dem Laderaum aufgewirbelte Staub verringert.

### Bezugszeichenliste:

- 1: Laderaum
- 2: Luftansaugvorrichtung
- 3: Klimaanlage
- 4: Lufteinlass
- 5: Luftzufuhrröhren
- 6: Öffnungen
- 7: Luftauslass
- 8: Ventilatoren
- 9: Schutzgitter
- 10: Schmutzauffangbox
- 11: Trennwand
- 12: Drucksteuerventile

## Patentansprüche

1. Temperierbarer Laderaum (1) zum Transport von lebenden Tieren, insbesondere Geflügel, mit
einem Lufteinlass (4), um Frischluft einzubringen,
einer Temperierungseinrichtung (3), um die Frischluft zu temperieren,
einem Luftauslass (7, 8), der relativ zum Lufteinlass (4) so angeordnet ist, dass die temperierte Frischluft vom Lufteinlass (4) zum Luftauslass (7, 8) als Umluft den Laderaum (1) zumindest teilweise durchströmt und zumindest teilweise als Abluft in die Umgebung austritt,
wobei der Laderaum (1) über den Lufteinlass (3) kontinuierlich mit Frischluft versorgt wird,
**gekennzeichnet durch**
eine Steuereinrichtung, die zumindest die Menge der als Umluft **durch** den Laderaum strömenden Frischluft abhängig von der Beladung einstellt.

2. Laderaum nach Anspruch 1 oder 2, **dadurch gekennzeichnet, dass** ein dem Lufteinlass (4) nachgeschalteter Luftverteiler (5, 6, 12) relativ höher als der Luftauslass (7, 8) im Laderaum (1) angeordnet ist.

3. Laderaum nach einem der Ansprüche 1 oder 2, weiterhin **dadurch gekennzeichnet, dass** die Menge der Umluft abhängig von Bedingungen im Laderaum (1), insbesondere abhängig von Schadstoffbelastung, Temperatur, Druck und/oder Luftfeuchtigkeit,
und/oder abhängig von Umgebungsbedingungen wie Außentemperatur, Schadstoffbelastung der Frischluft und/oder Luftfeuchtigkeit einstellbar ist.

4. Laderaum (1) nach Anspruch 3, **dadurch gekennzeichnet, dass** die Bedingungen im Laderaum (1) mittels Sensoren gemessen werden, zu denen zumindest entweder ein Thermometer, eine Vorrichtung zur Messung der Strömungsgeschwindigkeit der Luft, ein Hygrometer, ein Luftdruckmessgerät oder eine CO2-Messvorrichtung gehören.

5. Laderaum (1) nach einem der vorhergehenden Ansprüche, **dadurch gekennzeichnet, dass** der Umluftstrom eine gerichtete Komponente vom Lufteinlass (4) zum Luftauslass (7,8) des Laderaums (1) aufweist.

6. Laderaum (1) nach einem der vorhergehenden Ansprüche, **dadurch gekennzeichnet, dass** der Lufteinlass (4) oder die Temperierungseinrichtung (3) oder der Luftverteiler (5, 6, 12) und/oder der Luftauslass (7, 8) eine Vorrichtung (9, 10) zum Entfemen von Staub, Schmutz, Gerüchen und/oder Bakterien aus der Luft aufweist.

7. Laderaum (1) nach Anspruch 5, **dadurch gekennzeichnet, dass** die Vorrichtung (9, 10) eine im unteren Bereich des Laderaums eines Fahrzeugs befindliche Öffnung (10B) umfasst, die während der Fahrt geöffnet werden kann, um Staub zu entfernen.

8. Laderaum (1) nach einem der vorhergehenden Ansprüche, **dadurch gekennzeichnet, dass** der Laderaum (1) volumenmäßig in Abteile unterteilbar ist und strömungstechnische Mittel (12) aufweist, die eine unabhängige Versorgung einzelner Volumina des Laderaums mit temperierter Frischluft und/oder Umluft gestatten.

9. Laderaum (1) nach einem der vorhergehenden Ansprüche, **dadurch gekennzeichnet, dass**
die Temperierungseinrichtung (3) auf einer Seite des Laderaums (1) angebracht ist und
der Laderaum (1) von einer Seite aus beladbar ist, an der nicht die Temperierungseinrichtung (3) angebracht ist.

10. Laderaum (1) nach einem der vorhergehenden Ansprüche, **gekennzeichnet durch**
strömungstechnische Mittel (6), die über die gesamte Ladefläche eine gleichmäßige Umwälzung der Umluft sicherstellen können.

11. Laderaum nach Anspruch 10, **dadurch gekennzeichnet, dass** die strömungstechnischen Mittel (6) in Öffnungen bestehen, die in einem Luftverteiler (5) für die Umluft angebracht sind, wobei die Öffnungen (6) mit in Strömungsrichtung zunehmender Entfernung vom Lufteinlass (4) größer werden.

12. Laderaum nach Anspruch 10, **dadurch gekennzeichnet, dass** die strömungstechnischen Mittel (6) in Ventilatoren betehen, welche im Laderaum (1) angeordnet sind und die Umluft umwälzen.

13. Lastkraftwagen mit einem Laderaum (1) nach einem der Ansprüche 1 bis 12.

14. Sattelzugauflieger (1) mit einem Laderaum nach einem der Ansprüche 1 bis 12.

15. Frachtcontainer mit einem Laderaum nach einem der Ansprüche 1 bis 12.

16. Verfahren zum Temperieren eines Laderaums (1) für den Transport von lebenden Tieren, insbesondere Geflügel,
**gekennzeichnet durch** den Schritt der kontinuierlichen Versorgung des Laderaums mit temperierter Frischluft, und **durch** den weiteren Schritt des Einstellens der Menge und Temperatur der zugeführten Frischluft auf der Grundlage der Beladung des Laderaums (1).

17. Verfahren zum Temperieren eines Laderaums (1) nach Anspruch 16, mit den weiteren Schritten
Umwälzen der Frischluft als Umluft in dem Laderaum (1) mittels strömungstechnischer Mittel, und
Abgeben eines Teils der Umluft aus dem Laderaum (1) als Abluft durch einen Luftauslass (7, 8) an die Umgebung.

18. Verfahren nach einem der Ansprüche 16 oder 17, **dadurch gekennzeichnet, dass**
die Frischluft an einem relativ höheren Ort in den Laderaum (1) eingeführt und
die Umluft an einem relativ niedrigeren Ort aus dem Laderaum (1) als Abluft durch einen Luftauslass (7, 8) herausgeführt wird.

19. Verfahren nach einem der Ansprüche 16 bis 18, **gekennzeichnet durch** die zusätzlichen Schritte
Erfassen der Qualität der Umluft und/oder Abluft, insbesondere basierend auf Temperatur, Feuchte, Druck und/oder Schadstoffbelastung der Umluft oder Abluft,
Anpassen der zugeführten Frischluftmenge so, dass die erfasste Qualität der Abluft gleich einem vorab bestimmten oder besser als ein vorab bestimmter Wert ist, und
Anpassen der Temperierleistung **durch** die Temperierungseinrichtung (3) so, dass die geänderte Luftmenge auf eine gewünschte Ziellufttemperatur gebracht wird.
